(19) Europäisches Patentamt / European Patent Office / Office européen des brevets

(11) **EP 2 802 992 B1**

(12) **FASCICULE DE BREVET EUROPEEN**

(45) Date de publication et mention de la délivrance du brevet:
**28.02.2018 Bulletin 2018/09**

(21) Numéro de dépôt: **13705204.9**

(22) Date de dépôt: **11.01.2013**

(51) Int Cl.:
*G06F 12/0846* *(2016.01)*   *G06F 12/0864* *(2016.01)*

(86) Numéro de dépôt international:
**PCT/FR2013/050076**

(87) Numéro de publication internationale:
**WO 2013/104875 (18.07.2013 Gazette 2013/29)**

(54) **SYSTEME ET PROCEDE DE GESTION DE CORRESPONDANCE ENTRE UNE MEMOIRE CACHE ET UNE MEMOIRE PRINCIPALE**

SYSTEM UND VERFAHREN ZUR VERWALTUNG DER KORRESPONDENZ ZWISCHEN EINEM CACHESPEICHER UND EINEM HAUPTSPEICHER

SYSTEM AND METHOD FOR MANAGING CORRESPONDENCE BETWEEN A CACHE MEMORY AND A MAIN MEMORY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2012  FR 1250349**

(43) Date de publication de la demande:
**19.11.2014  Bulletin 2014/47**

(73) Titulaire: **Commissariat à l'Énergie Atomique et aux Énergies Alternatives 75015 Paris (FR)**

(72) Inventeurs:
• **GUTHMULLER, Eric**
  **F-38300 Ruy (FR)**
• **MIRO PANADES, Ivan**
  **F-38000 Grenoble (FR)**

(74) Mandataire: **Bonnet, Michel**
  **Cabinet Bonnet**
  **93, rue Réaumur - Boîte 10**
  **75002 Paris (FR)**

(56) Documents cités:
**GB-A- 2 412 987      US-A- 5 572 700**
**US-B1- 6 351 788**

## Description

La présente invention concerne un système de gestion de correspondance entre une mémoire cache et une mémoire principale. Elle concerne également un procédé et un programme d'ordinateur correspondants.

Une mémoire cache est destinée à stocker, de façon temporaire et au plus près des moyens de calcul d'un système informatique, par exemple un ou plusieurs microprocesseurs, des données par ailleurs stockées dans une mémoire principale et utilisées en lecture ou en écriture par les moyens de calcul. En s'interposant entre les moyens de calcul et la mémoire principale destinée à être sollicitée en lecture ou écriture de données par ces moyens de calcul, et en se présentant sous la forme d'une mémoire plus petite mais d'accès plus rapide que la mémoire principale, la mémoire cache permet d'accélérer les calculs. Le principe d'utilisation de la mémoire cache est le suivant : toutes les opérations de lecture ou écriture de données en mémoire principale exécutées par les moyens de calcul sont dirigées d'abord vers la mémoire cache ; si les données sont en mémoire cache (succès ou « hit » de la mémoire cache), elles sont retournées directement aux moyens de calcul (en lecture) ou mises à jour dans la mémoire cache (en écriture) ; si au contraire elles ne sont pas en mémoire cache (défaut ou « miss » de la mémoire cache), elles sont transférées de la mémoire principale vers la mémoire cache avant d'être fournies aux moyens de calcul (en lecture) ou stockées dans la mémoire cache avant d'être transférées vers la mémoire principale (en écriture).

En pratique, plusieurs niveaux de mémoire cache peuvent être prévus entre les moyens de calcul et la mémoire principale. En pratique également, une mémoire cache peut être topologiquement organisé de façon complexe en une pluralité de bancs de mémoire accessibles via au moins un port de connexion, chaque banc de mémoire pouvant être considéré comme une mémoire cache élémentaire : dans ce cas, l'architecture est à temps d'accès non uniforme aux données stockées dans la mémoire cache, ce temps d'accès étant fonction de la localisation du banc de mémoire dans lequel est stockée temporairement une donnée et du port de connexion à partir duquel on accède à la mémoire cache.

Par ailleurs, une ligne de données, définie comme constituée d'un nombre prédéterminé de mots successifs de données stockés en mémoire cache ou principale (i.e. une ligne de données est constituée de données voisines), est la plus petite quantité de données pouvant être échangée entre la mémoire cache et la mémoire principale, sachant qu'un mot de données est la plus petite quantité de données devant être accessible en lecture ou en écriture par les moyens de calcul. Ainsi, la mémoire cache tire profit non seulement du principe de localité temporelle des données, selon lequel des données récemment utilisées par les moyens de calcul ont de fortes chances d'être réutilisées prochainement et doivent donc être stockées temporairement en mémoire cache, mais également du principe de localité spatiale des données, selon lequel des données voisines de données récemment utilisées par les moyens de calcul ont de fortes chances d'être utilisées prochainement et doivent donc être stockées temporairement en mémoire cache avec les données récemment utilisées dont elles sont voisines.

Une correspondance doit être établie entre la mémoire cache et la mémoire principale pour savoir comment attribuer temporairement une ligne de données de la mémoire cache, dite ligne de cache, à une ligne de données quelconque stockée dans la mémoire principale sachant que la mémoire principale comporte un nombre de lignes de données nettement plus élevé que le nombre de lignes de cache. Les systèmes connus de gestion de correspondance entre mémoire cache et mémoire principale implémentent généralement l'un des trois principes suivants :

- la correspondance pleinement associative,
- la correspondance préétablie,
- la correspondance associative par ensembles à N voies.

Le premier principe de correspondance pleinement associative consiste à attribuer a priori n'importe quelle ligne de cache à l'une quelconque des lignes de données de la mémoire principale. Aucune affectation préalable de zones de cache à des zones de la mémoire principale n'est établie. Le choix d'attribution d'une ligne de cache à une ligne de données est donc libre et se fait en pratique sur des critères de disponibilité ou d'ancienneté des données en cache, ce qui est optimal pour le taux de succès de la mémoire cache mais au prix d'une certaine complexité.

Le deuxième principe de correspondance préétablie consiste à appliquer une fonction modulo à l'adresse de chaque ligne de données de la mémoire principale, de sorte que l'on affecte a priori à plusieurs lignes de données, séparées successivement d'une distance constante (i.e. le modulo) dans la mémoire principale, une même ligne de cache. Ainsi, l'affectation préalable de zones de cache à des zones de la mémoire principale est totalement déterministe et l'attribution d'une ligne de cache à une ligne de données est imposée par la fonction modulo. C'est optimal en simplicité mais au prix d'un taux de succès de la mémoire cache généralement peu satisfaisant.

Enfin, le troisième principe de correspondance associative par ensembles à N voies, intermédiaire entre les deux premiers, consiste à affecter préalablement un ensemble à chaque ligne de données de la mémoire principale en fonction de son adresse, chaque ensemble étant réparti dans la mémoire cache dans N voies prédéfinies, puis à attribuer n'importe quelle ligne de cache à l'une quelconque des lignes de données de la mémoire principale dans l'ensemble qui lui est affecté, c'est-à-dire concrètement une ligne par voie. Ainsi, une affectation préalable de zones de cache à des zones de la mémoire principale est établie mais l'attribution d'une ligne de cache à une ligne de données conserve néanmoins une certaine liberté dans l'ensemble qui lui est affecté. Le choix final d'attribution d'une ligne de cache à une ligne de données se fait alors en pratique sur des critères de disponibilité ou d'ancienneté des données en cache, similaires à ceux pratiqués dans le premier principe mais simplifiés.

Dans la plupart des systèmes de gestion de correspondance entre mémoire cache et mémoire principale, seul l'un de ces trois principes est mis en oeuvre. En général, c'est le troisième principe qui est préféré.

Lorsque le deuxième ou troisième principe est appliqué, il peut être considéré que le système de gestion de correspondance assure la correspondance entre une mémoire cache, subdivisée implicitement en une pluralité de zones de cache, et une mémoire principale, subdivisée implicitement en une pluralité de zones de mémoire, et comporte :

- des moyens implicites d'affectation, à chaque zone de la mémoire principale, d'au moins une zone de la mémoire cache, et
- des moyens d'attribution temporaire, à une ligne de données quelconque stockée dans l'une desdites zones de la mémoire principale, d'une ligne de cache incluse uniquement dans une zone de cache affectée à la zone de mémoire principale dans laquelle est stockée ladite ligne de données.

La correspondance entre la mémoire cache et la mémoire principale est dans tous les cas implicite et imposée a priori par le principe de correspondance choisi. Elle est en outre uniquement basée sur l'expression de l'adresse des lignes de données dans la mémoire principale, indépendamment de toute considération sur la ou les applications, ou sur le ou les microprocesseurs, sollicitant la mémoire principale.

Le document US 6,351,788 B1 décrit un système et un procédé selon les préambules des revendications indépendantes.

Le document US 5,572,700 décrit un contrôleur d'accès à une mémoire cache et une méthode correspondante permettant d'augmenter l'efficacité des accès à la mémoire cache en tenant compte de la prévisibilité caractérisant les accès mémoire de certains logiciels. A cet effet, le contrôleur de la mémoire cache peut être programmé pour empêcher certaines zones de la mémoire principale d'être stockées dans une ligne de cache particulière. Ainsi, les adresses des zones de la mémoire principale pouvant être affectées à une ligne de cache sont programmées en fonction du besoin spécifique d'accès à la mémoire du logiciel qui s'exécute dans le processeur, empêchant certaines zones de la mémoire principale d'être stockées dans une ligne de cache.

Par ailleurs, lorsque la mémoire cache est composée d'une pluralité de bancs de mémoire, chaque banc de mémoire applique l'un des principes précités, en général le troisième. Mais le choix préalable d'un banc pour le stockage temporaire d'une ligne de données peut être guidé simplement par une répartition uniforme des données entre les bancs disponibles pour la mémoire principale. Là encore, la correspondance est établie indépendamment de toute considération sur la ou les applications, ou sur le ou les microprocesseurs, sollicitant la mémoire principale.

Les systèmes de gestion de correspondance connus n'apparaissent donc pas suffisamment souples pour s'adapter à différentes situations de sollicitations de la mémoire principale, notamment lorsque plusieurs applications ou plusieurs microprocesseurs sont en concurrence. Pourtant, l'évolution des systèmes électroniques, notamment des systèmes sur puce, bidimensionnels ou tridimensionnels, va dans le sens d'une plus grande complexité des accès en mémoire, par un ou plusieurs microprocesseurs, pour une ou plusieurs applications. Il serait bon que les systèmes de gestion de correspondance puissent également intégrer cela.

En outre les structures de mémoire cache ont beaucoup évolué ces dernières années : accès uniformes ou non, architectures bidimensionnelles ou tridimensionnelles, répartitions statiques ou dynamique des données, bancs multiples, adaptativité, etc. De nombreuses publications attestent de cette évolution, parmi lesquelles :

- l'article de C. Kim, D. Burger et S.W. Keckler, intitulé « Nonuniform cache architecture for wire-delay dominated on-chip caches », IEEE Micro, volume 23, n° 6, pages 99-107, nov.-Déc. 2003,
- l'article de J. Huh, C. Kim, H. Shafi, L. Zhang, D. Burger et S.W. Keckler, intitulé « A NUCA substrate for flexible CMP cache sharing », Proceedings of the 19th International Conference on Supercomputing, pages 31-40, juin 2005, Boston MA,
- l'article de E. Bolotin, Z. Guz, I. Cidon, R. Ginosar et A. Kolodny, intitulé « The power of priority: NoC based distributed cache coherency », Proceedings of First International Symposium on Networks-on-Chips, pages 117-126, mai 2007, Princeton, NJ,
- l'article de H. Dybdahl et P. Stenstrom, "An adaptive shared/private NUCA cache partitioning scheme for chip multiprocessors », Proceedings of the IEEE 13th International Symposium on High Performance Computer Architecture, pages 2-12, février 2007, Scottsdale, AZ,
- l'article de H. Saito, M. Nakajima, T. Okamoto, Y. Yamada, A. Ohuchi, N. Iguchi T. Sakamoto, K. Yamaguchi et M. Mizuno, intitulé « A chip-stacked memory for on-chip SRAM-rich SoCs and processors » IEEE Journal of Solid-State Circuits, volume 45, n° 1, pages 15-22,Janvier 2010,
- l'article de B. Zhao, Y. Du, Y. Zhang et J. Yang, intitulé « Variation-tolerant non-uniform 3D cache management in die stacked multicore processor », Proceedings of the 42nd annual IEEE/ACM International Symposium on Microarchitecture, pages 222-231, décembre 2009, New York, NY,
- l'article de N. Madan, L. Zhao, N. Muralimanohar, A. Udipi, R. Balasubramonian, R. Iyer, S. Makineni et D. Newell, intitulé « Optimizing communication and capacity in a 3D stacked reconfigurable cache hierarchy », Proceedings of IEEE 15th International Symposium on High Performance Computer Architecture, pages 262-274, février 2009, Raleigh, NC,
- l'article de L. Feihui, C. Nicopoulos, T. Richardson, Y. Xie, V. Narayanan et M. Kandemir, intitulé « Design and management of 3D chip multiprocessors using network-in-memory », Proceedings of 33rd annual International Symposium on Computer Architecture, pages 130-141, mai-juin 2006, Boston, MA.

Il convient à cet égard de noter en particulier les avancées proposées dans les demandes de brevets publiées sous les numéros US 2010/0275049 A1 et WO 2006/078837 A2. La demande de brevet US 2010/0275049 A1 divulgue le principe d'une adaptation de la taille d'une mémoire cache à bancs multiples, par désactivation possible et dynamique d'une partie de ses bancs de mémoire. L'objectif poursuivi dans ce document est d'adapter dynamiquement la taille de la mémoire cache aux besoins de la mémoire principale en fonction des applications ou microprocesseurs la sollicitant. La mémoire principale et la mémoire cache y sont considérées, du point de vue de l'adaptation dynamique, comme deux entités globales. La demande de brevet WO 2006/078837 A2 divulgue un principe analogue, dans lequel certains bancs de mémoire d'une mémoire cache à bancs multiples peuvent être désactivés en tant que cache pour être alors opérationnels en tant que mémoire locale rapide, en fonction des besoins d'un microprocesseur connecté à cette mémoire cache. Dans ce document également, la mémoire principale et la mémoire cache sont considérées, du point de vue de l'adaptation dynamique, comme deux entités globales.

L'adaptation dynamique de la mémoire cache telle que décrite dans ces deux documents n'est donc pas non plus suffisamment souple pour réagir efficacement à des situations de concurrence entre plusieurs applications ou plusieurs microprocesseurs.

Il peut ainsi être souhaité de prévoir un système de gestion de correspondance entre mémoire cache et mémoire principale qui permette de s'affranchir d'au moins une partie des problèmes et contraintes précités.

L'invention a donc pour objet un système de gestion de correspondance entre une mémoire cache et une mémoire principale, tel que revendiqué dans la revendication 1.

Ainsi, grâce à l'invention, l'affectation spécifique de zones de cache à différentes zones de la mémoire principale est exprimée explicitement à l'aide de paramètres et peut être mise à jour en changeant ces paramètres. Elle devient donc ainsi configurable. Au-delà d'un principe de correspondance, pleinement associative, préétablie ou associative par ensembles à N voies, éventuellement appliqué entre la mémoire principale et la mémoire cache, une grande souplesse est alors donnée à l'utilisation de la mémoire cache par différentes applications ou différents processeurs dont les sollicitations peuvent être localisées dans différentes zones de la mémoire principale. Une telle affectation paramétrable peut remplacer l'un des trois principes de correspondance mentionnés ci-dessus ou le compléter avantageusement.

L'invention a également pour objet une puce électronique comportant une mémoire cache et un système de gestion de correspondance tel que défini précédemment.

De façon optionnelle, les caractéristiques revendiquées dans les revendications dépendantes 3 à 9 sont considérées dans des modes de réalisation de l'invention.

L'invention a également pour objet un procédé de gestion de correspondance entre une mémoire cache et une mémoire principale, tel que revendiqué dans la revendication 10.

De façon optionnelle, les caractéristiques revendiquées dans les revendications dépendantes 11 et 12 sont considérées dans des modes de réalisation de l'invention.

Enfin, l'invention a également pour objet un programme d'ordinateur téléchargeable depuis un réseau de communication et/ou enregistré sur un support lisible par ordinateur et/ou exécutable par un processeur, comprenant des instructions pour l'exécution des étapes d'un procédé de gestion de correspondance tel que défini précédemment, lorsque ledit programme est exécuté sur un ordinateur.

L'invention sera mieux comprise à l'aide de la description qui va suivre, donnée uniquement à titre d'exemple et faite en se référant aux dessins annexés dans lesquels :

- la figure 1 représente schématiquement la structure générale d'une puce électronique comportant une mémoire cache et un système de gestion de correspondance, selon un mode de réalisation de l'invention,
- la figure 2 illustre les étapes successives d'un procédé de gestion de correspondance mis en oeuvre par la puce électronique de la figure 1,
- la figure 3 est un exemple de correspondance établie par le système de gestion de correspondance de la puce électronique de la figure 1, suite à une exécution du procédé de la figure 2,
- les figures 4, 5 et 6 représentent schématiquement la structure générale d'une mémoire cache à bancs de cache selon trois modes de réalisation distincts de l'invention,
- la figure 7 représente schématiquement la structure générale de moyens d'attribution temporaire d'une mémoire cache selon un mode de réalisation de l'invention,

- la figure 8 représente schématiquement l'architecture d'un sélecteur de voie des moyens d'attribution temporaire de la figure 7,
- les figures 9 et 10 représentent schématiquement des architectures possibles en lecture et en écriture de la mémoire cache dont les moyens d'attribution temporaire sont illustrés sur la figure 7,
- les figures 11, 13 et 14 représentent partiellement et schématiquement la structure générale d'une mémoire cache à bancs de cache et à accès multiples non uniformes selon un mode de réalisation de l'invention,
- la figure 12 illustre l'affectation possible de ports de connexion de la mémoire cache des figures 11, 13 et 14 à des zones de mémoire principale, et
- la figure 15 représente partiellement et schématiquement la structure générale d'une mémoire cache tridimensionnelle selon un mode de réalisation de l'invention.

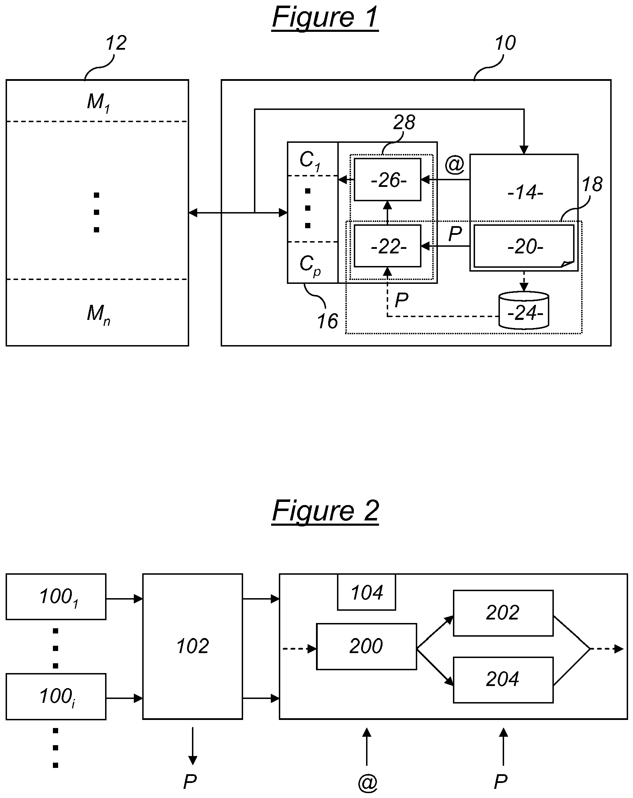

Le dispositif de traitement numérique représenté schématiquement sur la figure 1 comporte une puce électronique 10 connectée à une mémoire externe de grande capacité utilisée comme mémoire principale 12, la puce électronique 10 comportant un microprocesseur 14 associé à une mémoire cache 16. Dans l'exemple simple de la figure 1, la mémoire cache 16 peut être un cache bidimensionnel uniforme de premier niveau, mais l'invention s'applique plus généralement à tout type de mémoire cache de niveau quelconque, y compris aux mémoires caches bidimensionnelles ou tridimensionnelles de niveaux supérieurs à architecture non uniforme et à répartition statique ou dynamique. Le microprocesseur 14 est un processeur multitâche commun, capable d'exécuter une ou plusieurs applications de manière concurrente ou non.

Selon différentes utilisations possibles du dispositif de traitement numérique, la mémoire principale 12 peut être considérée comme subdivisée en une pluralité de zones de mémoire $M_1$, ..., $M_n$. Chaque zone de mémoire est par exemple un segment de mémoire d'adresses contiguës et est identifiée par des valeurs d'un ensemble prédéterminé de bits d'adresse, par exemple des bits de poids fort, parmi les bits d'adresse à l'aide desquels sont exprimées les adresses des données stockées dans la mémoire principale 12. De façon alternative ou complémentaire, chaque zone de mémoire identifiée correspond à un espace de mémoire destiné à être occupé et sollicité spécifiquement lors de l'exécution d'une application (i.e. d'un programme d'ordinateur) correspondante. Les zones de mémoire $M_1$, ..., $M_n$ ne sont pas nécessairement de la même taille.

La mémoire cache 16 peut également être considérée comme subdivisée en une pluralité de zones de cache $C_1$, ..., $C_p$. Chaque zone de cache est par exemple un segment de mémoire d'adresses contiguës. Dans le cas d'un cache bidimensionnel uniforme de premier niveau, chaque zone de cache est une portion prédéterminée de la mémoire cache uniforme. Dans le cas d'un cache à architecture non uniforme, notamment une mémoire cache à bancs de mémoire multiples organisés selon une topologie bidimensionnelle ou tridimensionnelle, chaque zone de cache est par exemple l'un ou plusieurs de ces bancs de mémoire. Les zones de cache $C_1$, ..., $C_p$ ne sont pas nécessairement de la même taille.

La puce électronique 10 comporte en outre un système 18 de gestion de correspondance entre la mémoire cache 16 et la mémoire principale 12, plus précisément entre les zones de cache $C_1$, ..., $C_p$ de la mémoire cache 16 et les zones de mémoire $M_1$, ..., $M_n$ de la mémoire principale 12. Ce système 18 de gestion de correspondance est par exemple réparti entre le microprocesseur 14 et la mémoire cache 16. Il est conçu pour engendrer et mettre à jour des paramètres d'affectation, à chaque zone de la mémoire principale 12, d'au moins une zone de la mémoire cache 16.

Le système 18 de gestion de correspondance comporte ainsi des moyens 20 d'affectation, à chaque zone de la mémoire principale 12, d'au moins une zone de la mémoire cache 16. Ces moyens d'affectation 20 sont par exemple informatiques, implémentés sous la forme d'un programme d'ordinateur, et activés sur exécution de ce programme d'ordinateur par le microprocesseur 14. Ils sont schématiquement représentés sur la figure sous la forme d'un fichier 20 dans le microprocesseur 14, mais le programme d'ordinateur est en fait un fichier disponible par exemple sur un disque dur externe et chargé en mémoire principale 12 ou en mémoire locale (non représentée) par le microprocesseur 14 pour son exécution. Les moyens d'affectation 20 peuvent être constitués d'un programme spécifique, prédéterminé et éventuellement paramétrable de mise en correspondance des zones de la mémoire principale 12 avec les zones de la mémoire cache 16, fournissant en sortie des paramètres d'affectation P. Il peut également s'agir d'une portion de programme, notamment une suite d'instructions dans une application plus complète, définissant à l'aide de paramètres les besoins particuliers de cette application en espace de mémoire cache. Le microprocesseur 14 qui active les moyens d'affectation 20 remplit alors une fonction de moyens de génération et de mise à jour des paramètres d'affectation P.

Le système 18 de gestion de correspondance comporte en outre au moins un détecteur d'affectation 22 implémenté dans la mémoire cache 16. Ce détecteur d'affectation 22 reçoit en entrée les paramètres d'affectation P et fournit en sortie une indication de correspondances entre les zones de mémoire principale $M_1$, ..., $M_n$ et les zones de cache $C_1$, ..., $C_p$. Il peut être implémenté simplement sous la forme d'une fonction paramétrable déterministe stockée en mémoire cache 16. Les paramètres d'affectation P sont fournis au détecteur d'affectation 22, soit directement par les moyens d'affectation 20, soit indirectement après avoir été stockés par ces derniers dans une mémoire locale 24 de la puce électronique 10.

Par ailleurs, le détecteur d'affectation 22 forme, avec au moins un module de distribution 26 implémenté dans la mémoire cache 16, des moyens 28 d'attribution temporaire, à une ligne de données quelconque stockée dans l'une des zones de mémoire principale $M_1$, ..., $M_n$, d'une ligne de cache incluse uniquement dans une zone de cache affectée à la zone de mémoire principale dans laquelle est stockée la ligne de données concernée. Plus précisément, le module de distribution 26 reçoit en entrée l'adresse @ d'une ligne de données stockée en mémoire principale 12 et fournit en sortie la sélection d'une ligne de cache à partir de l'indication de correspondances fournie par le détecteur d'affectation 22. Il peut lui aussi être implémenté simplement sous la forme d'une fonction paramétrable déterministe stockée en mémoire cache 16.

Cette fonction est par exemple une fonction de hachage, notamment une fonction modulo, une fonction de hachage à base de XOR, ..., ou une combinaison de ces fonctions. Les fonctions de hachage répondent en effet à des contraintes propres à la distribution de données en mémoire cache : calculs peu coûteux en matériel et en temps, uniformité des résultats dans l'ensemble d'arrivée (on ne veut pas privilégier une ligne de cache par rapport aux autres, au contraire). La fonction de hachage choisie doit en outre de préférence supprimer certaines régularités d'accès, telles qu'un accès régulier en mémoire principale avec un pas constant. Cet accès doit en effet si possible devenir irrégulier dans la mémoire cache suite à l'application de la fonction de hachage. Il est par exemple bien connu que lorsque le pas constant est une puissance de deux, cela poserait des problèmes de conflits dans la mémoire cache si ce pas constant était conservé. Enfin, la fonction de hachage choisie doit de préférence séparer en mémoire cache deux lignes de données consécutives en mémoire principale. Cela permet de solliciter plus uniformément dans le temps les différentes zones de cache, ce qui présente un intérêt lorsque la mémoire cache est constituée de plusieurs bancs de cache.

Un exemple de fonction de hachage convenant pour réaliser cette distribution est ainsi une fonction modulo dans laquelle la valeur du modulo est un nombre premier, supérieur au nombre d'ensembles dans le cas d'une correspondance associative par ensembles à N voies. L'inconvénient éventuel d'une telle solution est son coût en matériel, une division étant complexe à réaliser lorsque le diviseur n'est pas une puissance de deux.

Un autre exemple de fonction de hachage convenant pour réaliser cette distribution est une fonction à base de XOR. De nombreuses fonctions de hachage à base de XOR sont connues. Basées sur les propriétés du corps de Galois à deux éléments et ses extensions, elles permettent de réaliser un mélange efficace à moindre coût. Pour obtenir la ligne de cache sélectionnée, on multiplie une partie de l'adresse @ par une matrice qui représente la fonction de hachage. Les propriétés de la matrice peuvent être déterminées lorsque l'on a affaire à des formes algébriques connues (permutations, fonctions polynômiales, fonctions polynômiales irréductibles). On peut ainsi explicitement casser certains schémas d'accès. En outre, un raffinement possible des fonctions à base de XOR consiste à multiplier le résultat, à l'aide de la fonction AND qui est la multiplication dans le corps de Galois à deux éléments, avec une partie de l'adresse d'origine @. Ce schéma est généralement nommé XORM dans l'état de la technique.

Un exemple de matrice M pour fonction de hachage à base de XOR, pour seize ensembles en sortie (codés sur quatre bits) et huit bits extraits de l'adresse @, est par exemple :

$$ M = \begin{pmatrix} 1 & 0 & 0 & 1 \\ 0 & 1 & 1 & 0 \\ 0 & 1 & 0 & 0 \\ 1 & 0 & 0 & 0 \\ 1 & 0 & 0 & 0 \\ 0 & 1 & 0 & 0 \\ 0 & 0 & 1 & 0 \\ 0 & 0 & 0 & 1 \end{pmatrix}. $$

En variante, on peut aussi se passer de fonction de distribution spécifique, pour une simple distribution basée sur un principe de correspondance déterministe, par exemple sur la base de certains bits de poids fort de l'adresse @. De même, si l'on sait que les accès en mémoire cache doivent se faire d'une manière privilégiée connue, par exemple accès à une ligne de cache toutes les quatre lignes, il convient de ne pas tenir compte de certains bits de l'adresse @, en l'occurrence les deux bits de poids faible dans l'exemple précédent : on évite ainsi les conflits en optimisant l'utilisation de la mémoire cache.

En résumé, quel que soit le principe de distribution choisi, les moyens 28 d'attribution temporaire d'une ligne de cache à une ligne de données quelconque reçoivent en entrée l'adresse @ d'une ligne de données stockée en mémoire principale 12 ainsi que les paramètres d'affectation P et fournissent en sortie la sélection d'une ligne de cache dans l'une des zones de cache $C_1$, ..., $C_p$ affectées à la zone de mémoire principale dans laquelle est stockée la ligne de données d'adresse @.

On comprend que, tels qu'ils sont configurés, les moyens d'affectation 20 permettent de définir dynamiquement la correspondance entre la mémoire principale 12 et la mémoire cache 16 à l'aide de la génération et de la mise à jour possible des paramètres d'affectation P. Ainsi, selon la ou les tâches que doit exécuter le microprocesseur 14, de façon concurrente ou non, il devient possible d'adapter au cas par cas cette correspondance de manière à optimiser l'utilisation de la mémoire cache 16 pour, au final, limiter le nombre d'accès à la mémoire principale 12 ainsi que le nombre de défauts de mémoire cache. Par exemple, lorsqu'une seule tâche est exécutée par le microprocesseur 14 et que cette tâche n'utilise pas la mémoire principale 12 de manière uniforme, une correspondance non uniforme mise à jour par les moyens d'affectation 20 optimise l'utilisation de la mémoire cache 16 pour renforcer la quantité de mémoire cache allouée à une zone de mémoire principale très sollicitée au détriment d'une zone de mémoire principale peu utilisée. Par exemple également, lorsque plusieurs tâches s'exécutent concurremment en ne sollicitant pas la mémoire principale 12 de façon uniforme, là encore, une correspondance non uniforme mise à jour par les moyens d'affectation 20 optimise l'utilisation de la mémoire cache 16 par chacune des tâches. Un système de gestion de correspondance selon l'invention permet donc d'adapter la topologie de la mémoire cache 16 en fonction des besoins de la ou les tâches logicielles exécutées par le microprocesseur 14.

Le fonctionnement du système de gestion de correspondance 18 va maintenant être détaillé en référence à la figure 2.

Au cours d'étapes concurrentes $100_1$, ..., $100_i$, ..., éventuellement exécutées en parallèle et correspondant à des tâches concurrentes, le microprocesseur 14 active les moyens d'affectation 20 sur la base de besoins exprimés en espace de mémoire cache dans des lignes d'instructions de ces tâches concurrentes ou sur la base d'un ou plusieurs programmes spécifiques de mise en correspondance des zones de la mémoire principale 12 avec les zones de la mémoire cache 16. Ensuite, au cours d'une étape 102 de génération ou de mise à jour des paramètres d'affectation P, l'activation des moyens d'affectation 20 produit de nouvelles valeurs de ces paramètres d'affectation P. Ces nouvelles valeurs sont stockées en mémoire locale 24 ou directement transmises au détecteur d'affectation 22 de la mémoire cache 16.

Suite à l'étape 102, au cours d'une étape générale 104 d'exécution d'une ou plusieurs des tâches concurrentes précitées, chaque fois qu'un accès à un mot de données est souhaité par le microprocesseur 14 en lecture ou en écriture (étape 200), l'adresse @ de ce mot de données est fournie à la mémoire cache 16. La mémoire cache 16 comporte, de façon classique, un répertoire dans lequel sont répertoriées les lignes de données de la mémoire principale 12 qui sont temporairement stockées dans la mémoire cache 16. Si le mot de données considéré fait partie de ces lignes de données, il est alors retrouvé à une étape 202. Sinon, on passe à une étape 204 d'attribution temporaire, à la ligne de données comportant ce mot de données dans la mémoire principale 12, d'une ligne de cache incluse uniquement dans une zone de cache affectée à la zone de mémoire principale dans laquelle est stockée ladite ligne de données. Pour cela, l'adresse @ du mot de données considéré est fournie au module de distribution 26 de la mémoire cache 16 et les paramètres d'affectation P sont fournis au détecteur d'affectation 22. L'attribution temporaire d'une ligne de cache est alors effectuée à partir de l'adresse @ et des paramètres P.

La succession des étapes 200 et 202 ou 204 se reproduit autant de fois qu'un accès à un mot de données est souhaité par le microprocesseur 14.

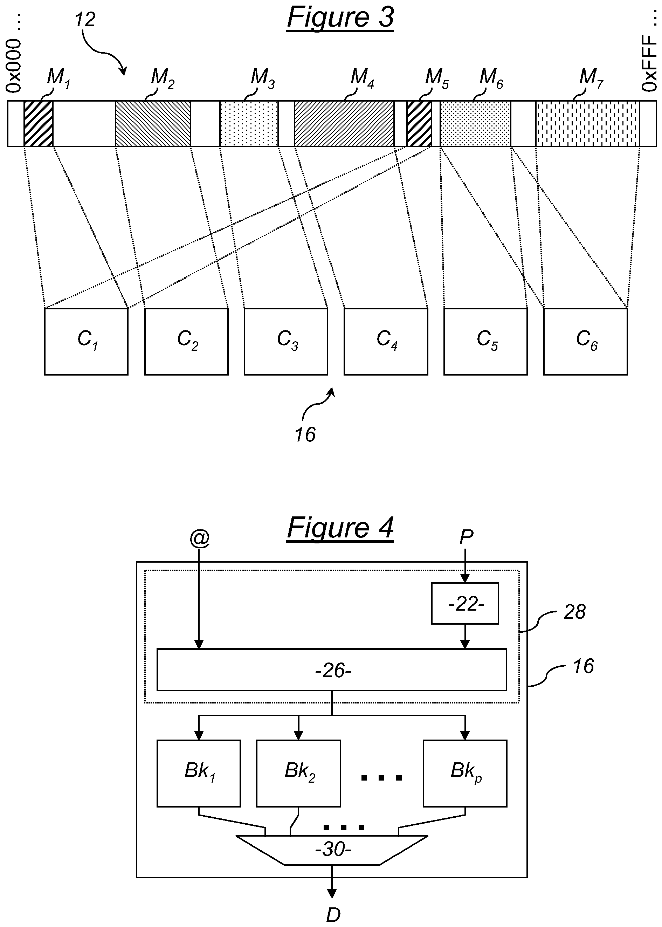

Comme illustré sur la figure 3 à l'aide de zones de mémoire représentées en mémoire principale 12 et en mémoire cache 16, le système de gestion de correspondance 18 de la puce électronique 10 permet :

- d'affecter une même zone de cache $C_1$ à plusieurs zones de mémoire principale $M_1$, $M_5$, de façon paramétrable à l'aide des paramètres P,
- inversement, d'affecter plusieurs zones de cache $C_5$, $C_6$ à une même zone de mémoire principale $M_6$, de façon paramétrable à l'aide des paramètres P,
- plus généralement, d'affecter de façon reconfigurable à l'aide des paramètres P un nombre variable de zones de cache, de tailles éventuellement variables, à un nombre variable de zones de mémoire principale, de tailles également éventuellement variables.

La figure 4 représente de façon schématique une mémoire cache, à architecture uniforme ou non, à plusieurs bancs de mémoire selon un premier mode de réalisation de l'invention. Dans ce mode de réalisation et comme indiqué précédemment, chaque banc de mémoire $Bk_1$, ..., $Bk_p$ de la mémoire cache 16 est une zone de cache. En outre, de façon optionnelle, chaque banc de mémoire $Bk_1$, ..., $Bk_p$ de la mémoire cache 16 peut constituer un cache à part entière, intégrant sa propre logique de contrôle permettant de gérer de façon décentralisée les succès et défauts d'accès de la mémoire cache 16. Les bancs de mémoire $Bk_1$, ..., $Bk_p$ sont raccordés à une unique sortie par l'intermédiaire d'un multiplexeur 30. Par ailleurs, comme dans le schéma de principe de la figure 1, les moyens d'attribution temporaire 28 de la mémoire cache 16 reçoivent en entrée l'adresse @ d'une ligne de données stockée en mémoire principale 12 ainsi que les paramètres d'affectation P. En sortie du multiplexeur 30, la mémoire cache 16 peut fournir un mot de données D demandé ou mis à jour par le microprocesseur 14.

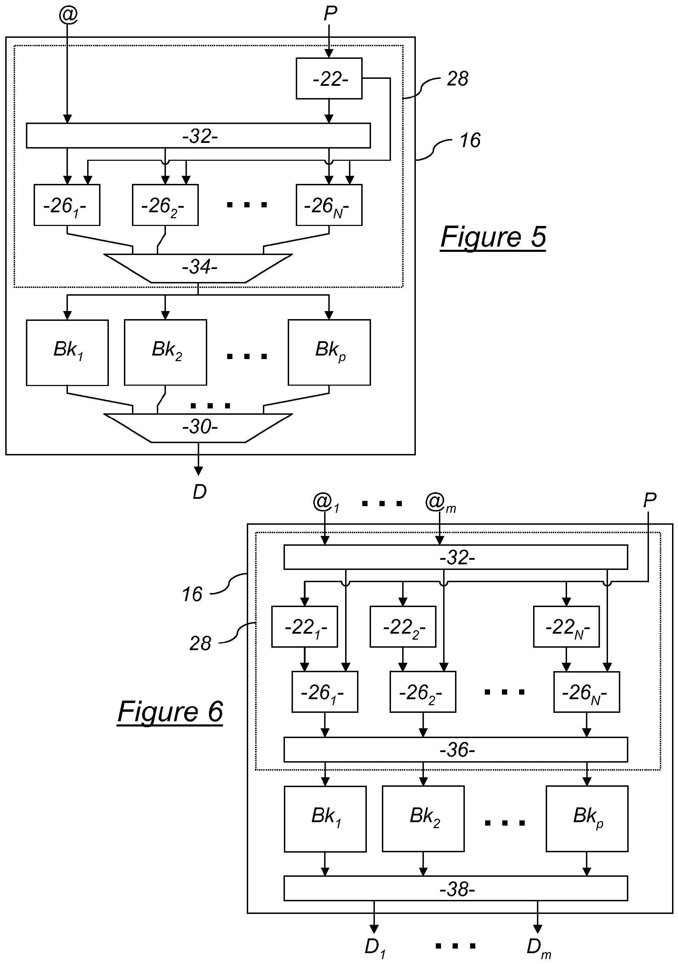

La figure 5 représente de façon schématique une mémoire cache, à architecture uniforme ou non, à plusieurs bancs de mémoire selon un deuxième mode de réalisation de l'invention.

Selon ce deuxième mode de réalisation, l'unique module de distribution 26 des moyens d'attribution temporaire 28 de la mémoire cache 16 est remplacé par une pluralité de modules de distribution $26_1$, ..., $26_N$ différents, chacun étant applicable sur une ou plusieurs zones de mémoire principale $M_1$, ..., $M_n$ et non plus sur la mémoire principale 12 dans son ensemble. Les moyens d'attribution temporaire 28 de la mémoire cache 16 comportent alors en outre une interface de routage 32 qui, en fonction de l'adresse @ d'une ligne de données stockée en mémoire principale 12 fournie en entrée, détermine la zone de mémoire principale $M_1$, ..., $M_n$ dans laquelle elle se trouve et par conséquent le module de distribution $26_i$ qui doit lui être associé. Le routage se fait par exemple de façon très simple, sur la base d'un certain nombre de bits de poids fort de l'adresse @. Il est avantageusement lui aussi reconfigurable à l'aide de paramètres pour pouvoir modifier dynamiquement l'association d'une zone de mémoire principale $M_i$ quelconque à l'un des modules de distribution $26_1$, ..., $26_N$. Enfin, conformément à ce deuxième mode de réalisation, les moyens d'attribution temporaire 28 de la mémoire cache 16 comportent un multiplexeur 34 raccordé aux différentes sorties des modules de distribution $26_1$, ..., $26_N$ pour la fourniture d'une unique sortie.

Ce deuxième mode de réalisation permet de proposer, de façon reconfigurable, plusieurs fonctions de distribution des accès vers les bancs de mémoire $Bk_1$, ..., $Bk_p$ de la mémoire cache 16, en fonction de la zone de mémoire principale $M_i$ sollicitée. Ces fonctions de distribution sont par exemple choisies parmi les fonctions de hachage ou autres détaillées précédemment en référence à la figure 1.

La figure 6 représente de façon schématique une mémoire cache, à architecture uniforme ou non, à plusieurs bancs de mémoire selon un troisième mode de réalisation de l'invention. Ce troisième mode de réalisation est conçu à partir du précédent pour permettre une pluralité d'accès en parallèle à la mémoire cache 16, afin d'augmenter le débit de cette dernière.

Pour cela, l'unique détecteur d'affectation 22 des moyens d'attribution temporaire 28 de la mémoire cache 16 est remplacé par une pluralité de détecteurs d'affectation $22_1$, ..., $22_N$ a priori tous identiques et accessibles en parallèle, chacun étant apte, sur réception des paramètres P, à fournir ses indications de correspondances à l'un des modules de distribution $26_1$, ..., $26_N$. Ainsi, sur réception simultanée de m adresses $@_1$, ..., $@_m$ de lignes de données stockées en mémoire principale 12, et sous réserve que ces m adresses soient associées par l'interface de routage 32 à des modules de distribution tous différents (il est donc nécessaire que m soit inférieur ou égal à N), les moyens d'attribution temporaire 28 sont capables de traiter parallèlement ces m sollicitations. Il est bien sûr nécessaire dans ce cas de remplacer le multiplexeur 34 par une deuxième interface de routage 36 permettant de multiplier le nombre d'accès simultanés en lecture/écriture fournis en sortie des moyens d'attribution temporaire 28. De même, le multiplexeur 30 doit être remplacé par une troisième interface de routage 38 permettant de fournir simultanément m mots de données $D_1$, ..., $D_m$ en réponse aux m sollicitations simultanées.

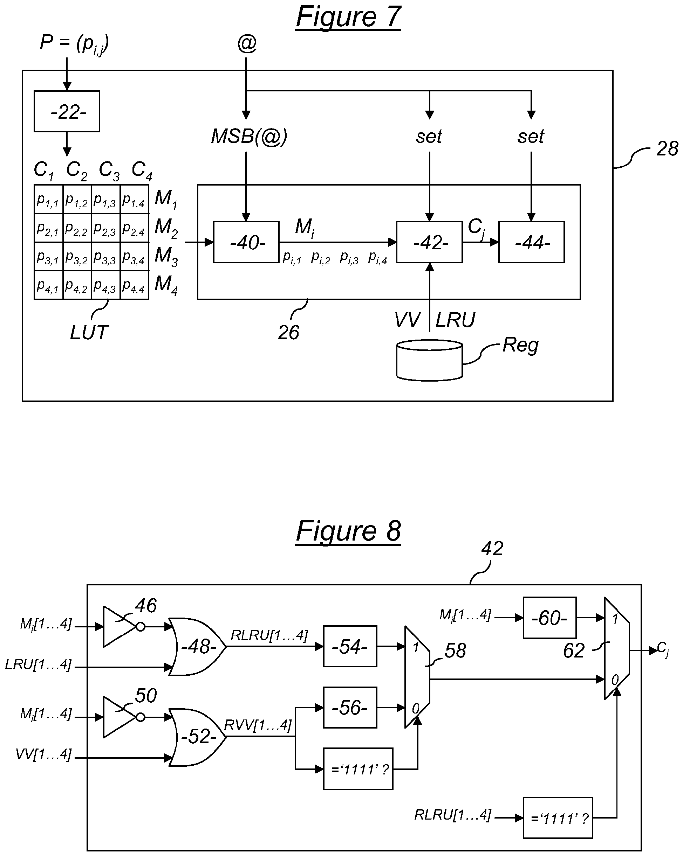

Un exemple concret d'implémentation de l'invention va maintenant être détaillé dans un cas particulièrement simple et en référence aux figures 7 à 10 : celui d'une mémoire cache bidimensionnelle uniforme à nombre quelconque de bancs de cache et fonctionnant en lecture et en écriture selon le principe de correspondance associative par ensembles à N voies. Par souci de clarté, N sera limité dans cet exemple à la valeur 4.

Conformément à ce principe de correspondance associative par ensembles à N voies, un ensemble est affecté à chaque ligne de données de la mémoire principale de façon déterministe et non configurable en fonction de son adresse, plus précisément en fonction d'un certain nombre de bits consécutifs prédéterminés qualifiés de « set » de l'adresse @ de chaque mot de données dans la mémoire principale. Dans cet ensemble, la sélection d'une ligne, ou autrement dit d'une voie, est a priori libre moyennant une vérification de disponibilité et/ou d'ancienneté des lignes de l'ensemble.

Mais en outre, conformément à une implémentation possible de l'invention, la mémoire principale est subdivisée en n zones de mémoire, par exemple n = N = 4, par exemple également déterminées sur la base d'un certain nombre (ici 2) de bits de poids fort de l'adresse @ notés MSB(@), et chaque voie du principe d'associativité par ensembles à N voies de la mémoire cache est considérée, indépendamment des ensembles, comme une zone de cache qui peut être affectée de façon paramétrable donc reconfigurable à l'une ou plusieurs de ces n zones de mémoire principale. Les N voies peuvent dans un cas particulier correspondre à autant de bancs de cache, mais ceci n'est pas une nécessité. Ainsi, à chaque zone de mémoire principale $M_i$ est affectée de une à N voies parmi les N voies disponibles de la correspondance associative par ensembles à N voies. Cette affectation paramétrable peut être mise en oeuvre à l'aide d'une table de correspondance LUT entre les zones de mémoire principale $M_1$, ..., $M_n$ et les voies, notées $C_1$, ..., $C_p$ (p=N).

Les moyens 28 d'attribution temporaire d'une ligne de cache à une ligne de données de la mémoire principale, sollicités lors de l'étape 204 mentionnée précédemment, peuvent alors être fonctionnellement détaillés comme illustré sur la figure 7.

Dans cet exemple particulièrement simple, le détecteur d'affectation 22 reçoit les paramètres d'affectation P sous la forme d'un ensemble de valeurs binaires $p_{i,j}$ destinées à remplir la table de correspondance LUT. Celle-ci est représentée comme intégrée dans les moyens d'attribution temporaire 28 mais peut être extérieure à ces derniers et stockée ailleurs dans la mémoire cache 16. Elle est mise à jour par le détecteur d'affectation 22 à l'aide des paramètres d'affectation P. Chaque paramètre $p_{i,j}$ indique, par sa valeur binaire « 1 » ou « 0 », si la voie $C_j$ est affectée ou non à la zone de mémoire principale $M_i$.

Dans cet exemple également, le module de distribution 26 reçoit l'adresse @, dans la mémoire principale 12, d'un mot de données requis. De cette adresse @, un module 40 de détection de zone du module de distribution 26 extrait la séquence de bits MSB(@) et sélectionne la zone de mémoire principale $M_i$ correspondante. Il fournit à un sélecteur de voie 42 du module de distribution 26 les valeurs binaires $p_{i,1}$, $P_{i,2}$, $P_{i,3}$, $P_{i,4}$ indiquant quelles voies de la mémoire cache 16 sont affectées à la zone de mémoire principale $M_i$ sélectionnée. Ces valeurs binaires peuvent être également notée vectoriellement $M_i[1...4]$ comme cela sera vu en référence à la figure 8 qui détaille une architecture possible du sélecteur de voie 42.

Le sélecteur de voie 42 reçoit en outre le set de l'adresse @ ainsi éventuellement que deux vecteurs d'état VV (noté VV[1...4] dans la figure 8) et LRU (noté LRU[1...4] dans la figure 8) correspondant à ce set. Selon un principe connu, le vecteur VV est un vecteur de validité à coefficients binaires indiquant, pour chaque voie de l'ensemble affecté à l'adresse @ conformément à son set, si elle est libre (valeur « 0 ») ou valablement occupée par une ligne de données (valeur « 1 »). Le vecteur LRU est un vecteur d'utilisation, par exemple à coefficients binaires, indiquant, pour chaque voie de l'ensemble affecté à l'adresse @ conformément à son set, si la ligne de données qu'elle contient a été sollicitée récemment. Une technique généralement répandue est de passer à « 1 » le coefficient de LRU correspondant à une voie lorsque la ligne de données que contient cette voie est sollicitée et de réinitialiser tous les coefficients du vecteur LRU à « 0 » lorsqu'ils sont tous à « 1 ». Ainsi, on obtient une information partielle à bas coût sur l'utilisation des lignes de données d'un même ensemble. A l'aide des informations $p_{i,1}$, $p_{i,2}$, $p_{i,3}$, $p_{i,4}$ sur la disponibilité des voies et des valeurs des vecteurs d'état VV et LRU, le sélecteur de voie 42 sélectionne une voie $C_j$, qualifiée de victime.

Enfin, le module de distribution 26 comporte un générateur 44 d'attribution temporaire d'une ligne de cache à la ligne de données comprenant le mot d'adresse @. Ce générateur d'attribution temporaire 44 attribue une ligne de cache de façon déterministe et connue en soi à partir des informations du set (définissant l'ensemble) et de la victime $C_j$ (définissant la voie sélectionnée).

Compte tenu de ce qui précède, une architecture possible pour le sélecteur de voie 42 est détaillée sur la figure 8.

Selon cette architecture, le vecteur $M_i[1...4]$ est fourni en entrée d'un premier inverseur 46 dont la sortie est fournie, avec le vecteur LRU[1...4], en entrée d'un premier opérateur logique OU 48. Cet opérateur logique OU 48 fournit donc en sortie un vecteur RLRU[1...4] dont les coefficients sont à 1 si la voie correspondante a été utilisée récemment ou si elle n'est pas disponible pour la zone de mémoire principale $M_i$ considérée.

Selon cette même architecture, le vecteur $M_i[1...4]$ est fourni en entrée d'un second inverseur 50 dont la sortie est fournie, avec le vecteur VV[1...4], en entrée d'un second opérateur logique OU 52. Cet opérateur logique OU 52 fournit donc en sortie un vecteur RVV[1...4] dont les coefficients sont à « 1 » si la voie correspondante contient déjà une ligne de données ou si elle n'est pas disponible pour la zone de mémoire principale $M_i$ considérée.

Le vecteur RLRU[1...4] est fourni en entrée d'un premier codeur 54 configuré pour calculer et fournir en sortie l'index du premier bit (i.e. coefficient) à « 0 » dans le vecteur RLRU[1...4]. Il remplit donc une fonction de sélection d'une voie parmi les disponibles et non utilisées récemment (en l'occurrence la première dans le sens de test choisi, ce sens important peu par ailleurs). Si tous les bits du vecteur RLRU[1...4] sont à « 1 », il retourne un index prédéterminé, par exemple l'index RLRU[1] par défaut pour simplifier le schéma logique du codeur 54, ou un index tiré aléatoirement.

De même, le vecteur RVV[1...4] est fourni en entrée d'un deuxième codeur 56 configuré pour calculer et fournir en sortie l'index du premier bit (i.e. coefficient) à « 0 » dans le vecteur RVV[1...4]. Il remplit donc une fonction de sélection d'une voie parmi les disponibles et non remplies (en l'occurrence la première dans le sens de test choisi, ce sens important peu par ailleurs). Si tous les bits du vecteur RVV[1...4] sont à « 1 », il retourne un index prédéterminé, par exemple l'index RVV[1] par défaut pour simplifier le schéma logique du codeur 56, ou un index tiré aléatoirement.

La sortie du premier codeur 54 est fournie en entrée « 1 » d'un premier multiplexeur 58, tandis que la sortie du deuxième codeur 56 est fournie en entrée « 0 » de ce même premier multiplexeur 58. En considérant le vecteur RVV comme prioritaire sur le vecteur RLRU, le premier multiplexeur 58 transmet le résultat du codage 54 réalisé sur le vecteur RLRU si tous les coefficients du vecteur RVV sont à « 1 » et le résultat du codage 56 réalisé sur le vecteur RVV sinon.

Par ailleurs, le vecteur $M_i[1...4]$ est fourni en entrée d'un troisième codeur 60 configuré pour calculer et fournir en sortie l'index du premier bit (i.e. coefficient) à « 1 » dans le vecteur $M_i[1...4]$. Il remplit donc une fonction de sélection d'une voie parmi les disponibles (en l'occurrence la première dans le sens de test choisi, ce sens important peu par ailleurs). Si tous les bits du vecteur $M_i[1...4]$ sont à « 0 », il retourne un index prédéterminé, par exemple l'index $M_i[1]$ par défaut pour simplifier le schéma logique du codeur 60, ou un index tiré aléatoirement. On notera qu'en variante le troisième codeur 60 pourrait être remplacé par un codeur identique aux codeurs 54 et 56 mais précédé alors d'un inverseur : le résultat serait le même.

La sortie du troisième codeur 60 est fournie en entrée « 1 » d'un second multiplexeur 62, tandis que la sortie du premier multiplexeur 58 est fournie en entrée « 0 » du second multiplexeur 62. En considérant le vecteur RLRU comme prioritaire sur le vecteur $M_i$, le second multiplexeur 62 transmet le résultat du codage 60 réalisé sur le vecteur $M_i$ si tous les coefficients du vecteur RLRU sont à « 1 » et le résultat transmis par le premier multiplexeur 58 sinon. La sortie du sélecteur de voie 42 est ainsi celle du second multiplexeur 62, c'est-à-dire une voie $C_j$ sélectionnée parmi les voies possibles pour l'ensemble et la zone de mémoire principale considérés.

L'exemple concret détaillé ci-dessus présente l'inconvénient de diminuer le nombre de voies disponibles pour une zone de mémoire principale donnée. Une solution consiste alors à appliquer une fonction de hachage sur les bits de l'adresse @ pour déterminer l'identifiant de set à utiliser. Ainsi et comme cela a été indiqué précédemment, on limite le nombre de collisions à l'intérieur d'un même ensemble en cassant la linéarité de certains schémas d'accès à la mémoire cache 16.

Dans cet exemple concret, lorsque la mémoire cache 16 comporte le mot de données dont l'accès en lecture ou en écriture est souhaité, son fonctionnement au cours de l'étape 202 mentionnée précédemment reste inchangé par rapport à ce qui est connu de l'état de la technique.

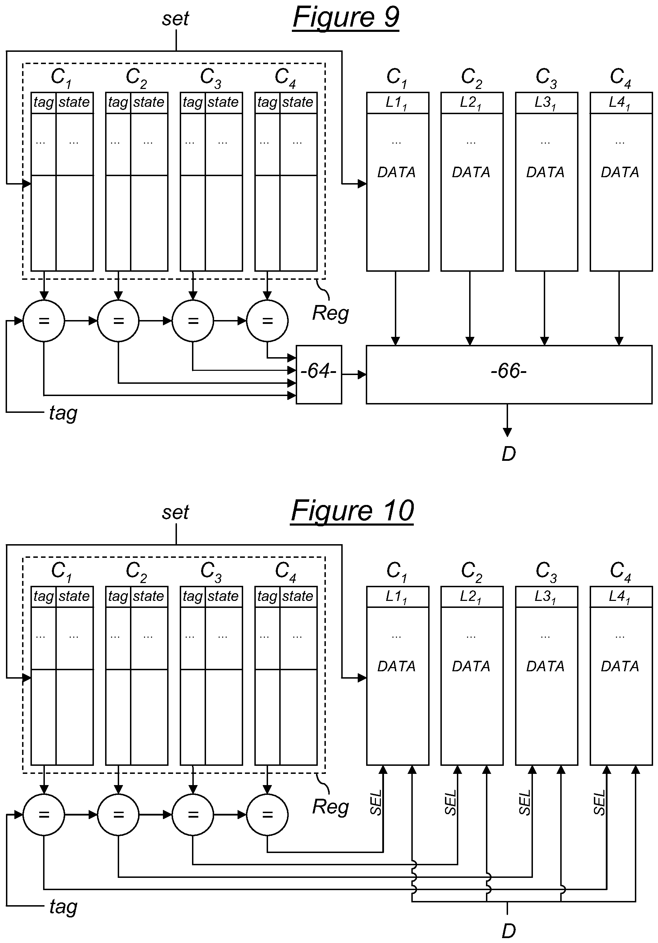

Ainsi, en lecture, l'architecture de la mémoire cache 16 est conforme à celle représentée sur la figure 9. Le set est extrait de l'adresse @ du mot de données que l'on souhaite lire et les valeurs de tag (i.e. l'ensemble de bits qui avec le set identifient complètement la ligne de données comportant le mot recherché dans la mémoire cache 16) correspondant à ce set dans chacune des voies $C_1$, $C_2$, $C_3$, $C_4$ et stockées dans le répertoire Reg de la mémoire cache 16 sont comparées au tag de l'adresse @. Le résultat de ces comparaisons est fourni à un codeur 64 qui reprend cette valeur de tag et la voie $C_j$ qui la comporte. A l'aide de la valeur de set et de la voie $C_j$ sélectionnée, les bits résiduels (DATA) du mot de données que l'on souhaite lire sont retrouvés dans la mémoire cache 16. Un module de concaténation 66 reconstitue alors le mot de données D à partir du tag, du set et des bits résiduels retrouvés en mémoire cache.

En écriture, l'architecture de la mémoire cache 16 est conforme à celle représentée sur la figure 10. Le set est extrait de l'adresse @ du mot de données que l'on souhaite mettre à jour dans la mémoire cache 16 et les valeurs de tag correspondant à ce set dans chacune des voies $C_1$, $C_2$, $C_3$, $C_4$ et stockées dans le répertoire Reg de la mémoire cache 16 sont comparées au tag de l'adresse @. Le résultat de ces comparaisons permet de sélectionner (signal SEL) la voie $C_j$ qui comporte le tag de l'adresse @. A l'aide de la valeur de set et de la voie $C_j$ sélectionnée, les bits résiduels du mot de données D que l'on souhaite mettre à jour sont transmis et stockés (sous la forme DATA) dans l'ensemble (correspondant au set) et la voie sélectionnés.

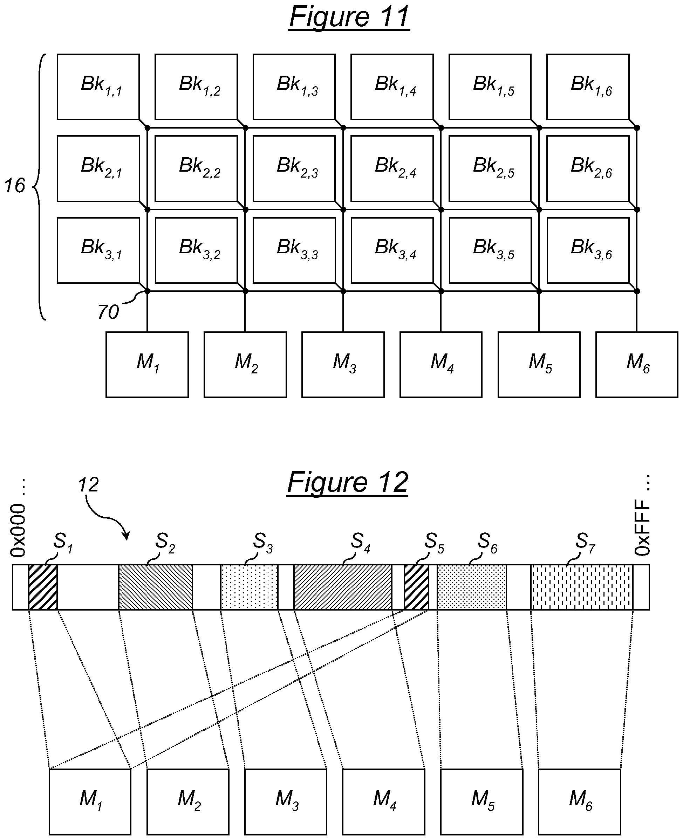

Un autre exemple concret d'implémentation de l'invention va maintenant être détaillé dans un cas plus complexe que le précédent et en référence aux figures 11 à 15 : celui d'une mémoire cache NUCA (de l'anglais « Non Uniform Cache Access »), c'est-à-dire une mémoire cache bidimensionnelle ou tridimensionnelle à accès non uniforme et à nombre élevé de bancs de cache, chaque banc de cache pouvant fonctionner indépendamment des autres en lecture et en écriture selon un principe de correspondance qui lui est propre : autrement dit, chaque banc de cache peut comporter sa propre logique de contrôle. Cette mémoire cache NUCA est par exemple un cache de niveau supérieur voire de dernier niveau.

Dans un mode de réalisation avantageux, chaque banc de cache est en fait un cache autonome complet fonctionnant selon un principe de correspondance associative par ensembles à N voies. Il n'est à cet égard pas nécessaire que le type de mémoire soit homogène d'un banc de cache à l'autre dans l'architecture proposée. En outre, associés à chaque banc de cache autonome se trouvent un ou plusieurs automates d'états chargés d'ordonnancer le traitement des requêtes et des réponses. Le contrôle est ainsi distribué dans chaque banc de cache, ce qui améliore la scalabilité de l'ensemble lorsque le nombre de bancs de cache et de processeurs sollicitant la mémoire cache 16 augmente. Il n'y a en effet aucun point de contention dans cette architecture au niveau de la lecture et de l'écriture des données dans la mémoire cache NUCA ainsi formée.

Comme illustré sur la figure 11 dans un cas particulier bidimensionnel à 3 lignes et 6 colonnes, la mémoire cache 16 comporte un grand nombre de bancs de cache $Bk_{1,1}$, ... $Bk_{i,j}$, ... $Bk_{3,6}$ organisés en matrice et interconnectés entre eux par un réseau intégré sur puce 70 également matriciel. L'accès à ce réseau matriciel de bancs de cache se fait par des ports connectés à au moins une partie des noeuds du réseau intégré sur puce 70.

Dans un mode de réalisation avantageux, chaque port de connexion à la mémoire cache 16 est associé à l'une des zones de mémoire principale $M_1$, ..., $M_n$, avec n = 6 sur la figure 11. Chaque port peut en fait être associé à un accès de microprocesseur dans un système multiprocesseurs dans lequel, selon les applications exécutées, on associe à chaque microprocesseur une zone de mémoire principale $M_i$ adaptée à ses besoins.

C'est également dans ce mode de réalisation qu'il est pertinent de scinder le module de distribution 26 en une pluralité de modules de distribution $26_1$, ..., $26_N$ différents et indépendants comme cela a été détaillé en référence à la figure 5, par exemple un par zone de mémoire principale (N = n), ou autrement dit un par port de connexion ou par microprocesseur du système multiprocesseurs.

Comme illustré sur la figure 12, chaque zone de mémoire principale $M_i$ est associée à un ou plusieurs segments de mémoire principale notés $S_1$, ..., $S_7$ en fonction des besoins de chaque port de connexion à la mémoire cache 16. Cette association est librement définie et permet donc une certaine souplesse dans la gestion des accès à la mémoire cache 16.

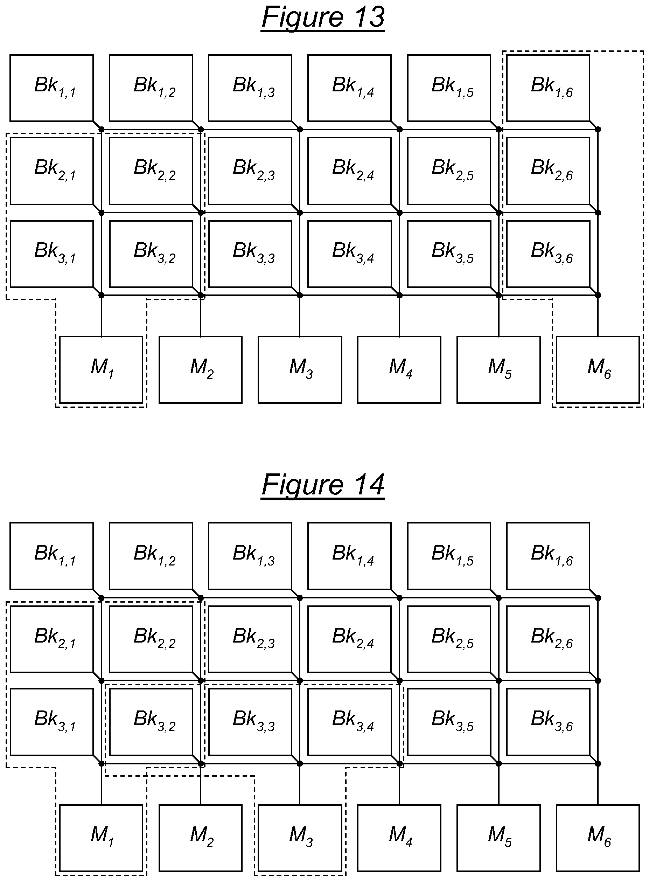

Par ailleurs, comme illustré sur la figure 13 et conformément à l'invention, à chaque port associé à chaque zone de mémoire principale $M_i$ identifiée est affecté de façon paramétrée et reconfigurable au moins l'un des bancs de cache $Bk_{1,1}$, ... $Bk_{i,j}$, ... $Bk_{3,6}$ considérés chacun comme une zone de cache identifiée. Comme dans l'exemple concret d'implémentation précédent, cette affectation paramétrable peut être mise en oeuvre à l'aide d'une table de correspondance entre les ports de connexion (ou zones de mémoire principale) $M_1$, ..., $M_n$ et les bancs de cache $Bk_{1,1}$, ... $Bk_{i,j}$, ... $Bk_{3,6}$. Ainsi par exemple, sur la figure 13, il est indiqué en traits pointillés qu'au port de connexion associé à la zone de mémoire principale $M_1$ sont affectés les bancs de cache $Bk_{2,1}$, $Bk_{2,2}$, $Bk_{3,1}$ et $Bk_{3,2}$ et qu'au port de connexion associé à la zone de mémoire principale $M_6$ sont affectés les bancs de cache $Bk_{1,6}$, $Bk_{2,6}$ et $Bk_{3,6}$.

La figure 14 illustre qu'un même banc de cache peut être affecté à plusieurs ports de connexion. Ainsi par exemple, il est indiqué en traits pointillés qu'au port de connexion associé à la zone de mémoire principale $M_1$ sont affectés les bancs de cache $Bk_{2,1}$, $Bk_{2,2}$, $Bk_{3,1}$ et $Bk_{3,2}$ et qu'au port de connexion associé à la zone de mémoire principale $M_3$ sont affectés les bancs de cache $Bk_{3,2}$, $Bk_{3,3}$ et $Bk_{3,4}$, le banc de cache $Bk_{3,2}$ étant commun à ces deux ports de connexion. Ainsi deux microprocesseurs accédant aux deux ports de connexion peuvent entrer en concurrence sur les entrées du banc de cache commun $Bk_{3,2}$. Le microprocesseur le plus actif aura tendance à accaparer davantage d'entrées et donc à disposer d'un espace de stockage temporaire plus élevé en mémoire cache. Cette possibilité de concurrence contribue à l'adaptation de la charge dynamique offerte par l'invention mais à un niveau de granularité plus fin. Il convient de noter également qu'un même microprocesseur peut se concurrencer lui-même s'il accède à deux ports de connexion en conflit sur un banc de cache.

La façon dont un port de connexion répartit les données entre les bancs de cache qui lui sont affectés dépend de la fonction de distribution utilisée par son module de distribution. Les propriétés souhaitées d'une telle fonction sont les suivantes :

- déterminisme : les mêmes paramètres donnent toujours le même résultat ; cette propriété est même nécessaire,
- uniformité : la répartition des accès ne doit pas privilégier un banc de cache au détriment d'un autre banc de mémoire de la même zone de cache,
- paramétrisation de la forme des zones de cache : cette dernière doit pouvoir être modifiée de manière dynamique ; cette propriété est nécessaire, mais il est possible de restreindre les formes possibles afin de simplifier la fonction de distribution.

Cette fonction de distribution, y compris la gestion de la modification de la forme des zones de cache, peut être implémentée dans la partie microprocesseur de la puce électronique 10 ou dans un bloc fonctionnel séparé à l'entrée du réseau intégré sur puce 70 menant aux bancs de cache, notamment au niveau des ports de connexion.

En conclusion, chaque port de connexion à la mémoire cache NUCA 16 est responsable d'une région de cache définie de façon librement paramétrable et reconfigurable par ses bancs de cache. Tout se passe comme si chaque port de connexion à la mémoire cache NUCA 16 exposait une mémoire cache logique différente et dynamiquement adaptée à la tâche qu'il traite, les mémoires cache logiques pouvant en réalité se recouvrir entre elles par l'intermédiaire de bancs de cache communs.

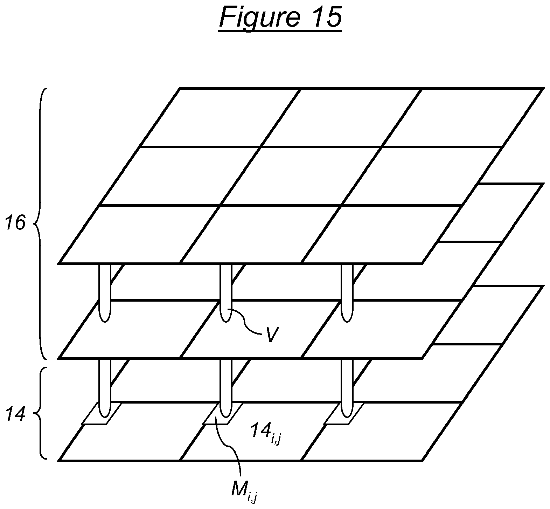

Il peut être ainsi créé une mémoire cache S-NUCA (de l'anglais « Static NUCA ») dont le répertoire est distribué à l'intérieur des bancs de cache. Le choix d'une répartition statique est aussi motivé par le type d'application visé, notamment lorsque la mémoire cache est tridimensionnelle comme cela est illustré sur la figure 15 : l'intégration tridimensionnelle permet de diminuer les écarts de latence entre les accès aux différents bancs de cache, donc les performances sont moins sensibles au placement des données à l'intérieur de la mémoire cache S-NUCA 16.

Toutefois, conformément à l'invention, la mémoire cache 16 reste reconfigurable dynamiquement en adaptant aux besoins les coefficients de la table de correspondance mentionnée précédemment. Il convient cependant de prévoir d'invalider au moins une partie des données stockées temporairement dans des zones de cache affectées par un changement de répartition des bancs de cache. Pour ce faire, on peut implémenter une invalidation globale ou sélective, ou basée sur un mécanisme prédéterminé. En outre, la durée de l'invalidation peut être réduite par des mécanismes de mémoire tampon stockant l'emplacement des données modifiées dans les bancs de mémoire concernés par le changement de répartition. Ainsi, bien que les zones de cache ainsi formées dans la mémoire cache 16 soient de type S-NUCA, elles peuvent changer de taille et de forme de manière dynamique afin d'assurer une adaptation à la charge selon un principe de granularité à grande échelle et se concurrencer entre elles via des bancs de mémoire mis en commun selon un principe de granularité à petite échelle.

La mémoire cache tridimensionnelle 16 finalement obtenue telle qu'illustrée sur la figure 15 comporte au mois deux couches superposées de bancs de cache disposées au dessus d'une couche de calcul 14 à microprocesseurs multiples disposés en matrice sous les couches de bancs de cache.

Chaque microprocesseur $14_{i,j}$ de la couche de calcul 14 accède à la mémoire cache tridimensionnelle 16 via un port $M_{i,j}$ associé à une zone de mémoire principale dont les bancs de cache correspondants sont accessibles par l'intermédiaire d'un réseau intégré tridimensionnel sur puce incluant des connexions verticales V. Ainsi en particulier, si un microprocesseur $14_{i,j}$ veut accéder à une zone de mémoire principale différente de celle correspondant au port $M_{i,j}$ auquel il est associé, il doit le faire par l'intermédiaire d'au moins un autre microprocesseur. On suppose donc alors qu'un réseau intégré sur puce relie les microprocesseurs de la couche de calcul 14 entre eux et qu'il intègre une fonction de routage basée sur les adresses mémoire afin d'associer chaque port à une zone de mémoire principale.

Dans cette architecture tridimensionnelle, la fonction de distribution associée à une zone de mémoire principale se situe avantageusement dans un bloc fonctionnel séparé associé au port $M_{i,j}$ correspondant.

L'exemple concret d'implémentation illustré à l'aide des figures 11 à 15 montre que l'invention peut être mise en oeuvre dans une architecture multiprocesseurs massivement parallèle intégrée sur puce multicouches à l'aide des techniques connues d'empilement tridimensionnel, notamment en matière de conception de circuits tridimensionnels sur plaque de silicium tirant parti des nouvelles technique d'empilement à base de vias TSV (de l'anglais « Through Silicon Vias »). Cette architecture multiprocesseurs tridimensionnelle peut être utilisée dans le cadre d'applications de calcul haute performance nécessitant une puissance de calcul élevée et une taille mémoire de plusieurs gigaoctets puisqu'elle permet un accès rapide à de la mémoire cache embarquée au dessus de couches de calcul. Elle est aussi envisageable dans les systèmes embarqués.

Une telle architecture de mémoire cache tridimensionnelle sur puce est généralement conçue pour satisfaire cinq besoins principaux :

- offrir une bande passante très rapide entre les couches de calcul et celles dédiées à la mémoire cache,
- s'adapter aux besoins en mémoire du système multiprocesseurs sous-jacent en prévoyant la possibilité d'empiler plusieurs couches de mémoire,
- diminuer les coûts de production en réutilisant au maximum un même circuit de mémoire, celui-ci servant à plusieurs circuits de réseaux de multiprocesseurs sur puce grâce à la possibilité d'avoir des connexions non utilisées,
- assurer une tolérance aux pannes au sein du circuit en affectant au minimum ses fonctionnalités et performances, grâce à une isolation possible des modules défectueux, et
- rendre modulable la consommation générale d'énergie du circuit.

Or, l'un des verrous empêchant le passage à plusieurs centaines voire milliers d'éléments de calcul dans une telle architecture est l'accès à la mémoire principale se situant en dehors de la puce. Il apparaît alors clairement qu'un système sur puce tel que l'un de ceux décrits précédemment, en permettant d'optimiser les sollicitations de la mémoire cache, améliore d'une façon générale le débit vers la mémoire et limite les demandes sollicitant la mémoire principale.

D'une façon générale, il apparaît clairement que les systèmes sur puce décrits précédemment permettent d'optimiser l'utilisation d'une mémoire cache associée, directement (premier niveau) ou indirectement (niveau supérieur), à un ou plusieurs microprocesseurs en la rendant reconfigurable à volonté, grâce à un jeu de paramètres pouvant être mis à jour par les microprocesseurs eux-mêmes.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

**Revendications**

1. Système (18) de gestion de correspondance entre une mémoire cache (16), subdivisée en une pluralité de zones de cache ($C_1$, ..., $C_p$) et une mémoire principale (12), subdivisée en une pluralité de zones de mémoire ($M_1$, ..., $M_n$) associées chacune spécifiquement à une application logicielle d'un ensemble d'applications logicielles concurrentes, la mémoire cache (16) étant pourvue de plusieurs ports de connexion et chacune desdites zones de mémoire principale étant associée à un unique port de connexion de la mémoire cache, ce port étant dédié à l'application logicielle correspondant à cette zone de mémoire principale, le système (18) comportant :

- des moyens (20) d'affectation, à chaque zone ($M_1$, ..., $M_n$) de la mémoire principale (12), c'est-à-dire à chaque port de connexion permettant un accès à la mémoire cache, d'au moins une zone de cache ($C_1$, ..., $C_p$), et
- des moyens (28) d'attribution temporaire, à une ligne de données quelconque stockée dans l'une desdites zones ($M_1$, ..., $M_n$) de la mémoire principale (12), d'une ligne de cache de la mémoire cache (16),

**caractérisé en ce que** les moyens d'affectation (20) sont basés sur des paramètres d'affectation (P) indiquant une correspondance entre chaque port de connexion et la ou les zones de cache qui lui est ou sont affectée(s), et **en ce que** le système (18) comporte en outre des moyens (14) de génération et de mise à jour de ces paramètres d'affectation (P) par activation des moyens d'affectation (20) pour définir et modifier la ou les zones de cache affectée(s) à chaque port de connexion en fonction de besoins des applications concurrentes, les moyens d'attribution temporaire (28) étant alors conçus pour déterminer une ligne de cache à attribuer à une ligne de données à partir de ces paramètres d'affectation (P) et dans l'une des zones de cache ($C_1$, ..., $C_p$) affectée à la zone de mémoire principale dans laquelle est stockée ladite ligne de données.

2. Puce électronique (10) comportant une mémoire cache (16) et un système (18) de gestion de correspondance selon la revendication 1.

3. Puce électronique (10) selon la revendication 2, dans laquelle les moyens d'attribution temporaire (28) sont implémentés dans la mémoire cache (16) et comportent au moins un détecteur d'affectation (22) recevant en entrée les paramètres d'affectation (P) et fournissant en sortie une indication des correspondances entre les ports de connexion et les zones de cache ($C_1$, ..., $C_p$), c'est-à-dire entre les zones de mémoire principale ($M_1$, ..., $M_n$) et les zones de cache ($C_1$, ..., $C_p$).

4. Puce électronique (10) selon la revendication 3, dans laquelle les moyens d'attribution temporaire (28) comportent en outre au moins un module de distribution (26) recevant en entrée l'adresse (@) d'une ligne de données stockée en mémoire principale (12) et fournissant en sortie la sélection d'une ligne de cache à partir de l'indication de correspondances fournie par le détecteur d'affectation (22).

5. Puce électronique (10) selon la revendication 4, dans laquelle le module de distribution (26) est microprogrammé pour la mise en oeuvre d'une fonction paramétrable déterministe de fourniture d'une ligne de cache à partir de l'adresse (@) d'une ligne de données stockée en mémoire principale (12).

6. Puce électronique (10) selon la revendication 5, dans laquelle la fonction mise en oeuvre par le module de distribution (26) est une fonction de hachage, notamment une fonction modulo, une fonction de hachage à base de XOR ou une combinaison de ces fonctions.

7. Puce électronique (10) selon l'une quelconque des revendications 4 à 6, dans laquelle les moyens d'attribution temporaire (28) comportent :

   - une pluralité de détecteurs d'affectation ($22_1$, ..., $22_N$) accessibles en parallèle,
   - une pluralité de modules de distribution ($26_1$, ..., $26_N$) pour la réception simultanée d'une pluralité d'adresses ($@_1$, ..., $@_m$) de lignes de données stockées en mémoire principale (12), et
   - des interfaces (32, 36, 38) de routage de données en entrées et/ou sorties de ces pluralités de détecteurs d'affectation et modules de distribution.

8. Puce électronique (10) selon l'une quelconque des revendications 1 à 7, dans laquelle la mémoire cache (16) est une mémoire à bancs de mémoire multiples ($Bk_1$, ..., $Bk_p$) organisés selon une topologie bidimensionnelle ou tridimensionnelle, chaque zone de cache étant un banc de mémoire de la mémoire cache pouvant comporter sa propre logique de contrôle.

9. Puce électronique (10) selon la revendication 8, dans laquelle les bancs de mémoire ($Bk_1$, ..., $Bk_p$) de la mémoire cache (16) sont interconnectés entre eux par une structure (70) de réseau sur puce bidimensionnelle ou tridimensionnelle, la puce électronique comportant une pluralité de ports d'accès à cette structure de réseau sur puce, un port d'accès étant défini respectivement pour chacune desdites zones ($M_1$, ..., $M_n$) de la mémoire principale (12).

10. Procédé de gestion de correspondance entre une mémoire cache (16), subdivisée en une pluralité de zones de cache ($C_1$, ..., $C_p$) et une mémoire principale (12), subdivisée en une pluralité de zones de mémoire ($M_1$, ..., $M_n$) associées chacune spécifiquement à l'exécution d'une application logicielle d'un ensemble d'applications logicielles concurrentes en cours d'exécution ($100_1$, ..., $100_n$), la mémoire cache (16) étant pourvue de plusieurs ports de connexion et chacune desdites zones de mémoire principale étant associée à un unique port de connexion de la mémoire cache, ce port étant dédié à l'application logicielle correspondant à cette zone de mémoire principale, le procédé comportant :

   - une étape d'affectation, à chaque zone ($M_1$, ..., $M_n$) de la mémoire principale (12), c'est-à-dire à chaque port de connexion permettant un accès à la mémoire cache, d'au moins une zone de cache ($C_1$, ..., $C_p$), et
   - une étape d'attribution temporaire (204), à une ligne de données quelconque stockée dans l'une desdites zones ($M_1$, ..., $M_n$) de la mémoire principale (12), d'une ligne de cache de la mémoire cache (16),

   **caractérisé en ce que** l'affectation est basée sur des paramètres d'affectation (P) indiquant une correspondance entre chaque port de connexion et la ou les zones de cache qui lui est ou sont affectée(s), et **en ce que** le procédé comporte en outre une étape de génération (102) et mise à jour de ces paramètres d'affectation (P) pour définir et modifier la ou les zones de cache affectée(s) à chaque port de connexion en fonction de besoins des applications concurrentes, l'attribution temporaire d'une ligne de cache à une ligne de données étant alors effectuée à partir de ces paramètres d'affectation et dans l'une des zones de cache ($C_1$, ..., $C_p$) affectée à la zone de mémoire principale dans laquelle est stockée ladite ligne de données.

11. Procédé de gestion de correspondance selon la revendication 10, dans lequel chaque zone ($M_1$, ..., $M_n$) de la mémoire principale (12) est identifiée par des valeurs d'un ensemble prédéterminé de bits d'adresse, par exemple des bits de poids fort, parmi les bits d'adresse à l'aide desquels sont exprimées les adresses des données stockées dans la mémoire principale.

12. Procédé de gestion de correspondance selon la revendication 10 ou 11, dans lequel l'affectation à deux zones différentes de la mémoire principale (12) d'au moins une zone commune de la mémoire cache (16) est autorisée et paramétrable à l'aide des paramètres d'affectation (P).

13. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de gestion de correspondance selon l'une quelconque des revendications 10 à 12, lorsque ledit programme est exécuté sur un ordinateur.

**Patentansprüche**

1. System (18) zur Verwaltung der Korrespondenz zwischen einem Cachespeicher (16), der in eine Vielzahl von Cachebereichen ($C_1$, ..., $C_p$) unterteilt ist, und einem Hauptspeicher (12), der in eine Vielzahl von Speicherbereichen ($M_1$, ..., $M_n$) unterteilt ist, die jeweils speziell einer Softwareanwendung einer Gruppe konkurrierender Softwareanwendungen zugeordnet sind, wobei der Cachespeicher (16) mit mehreren Verbindungsports ausgestattet ist und jeder der Hauptspeicherbereiche einem einzigen Verbindungsport des Cachespeichers zugeordnet ist, wobei dieser Port für die Softwareanwendung bestimmt ist, die diesem Hauptspeicherbereich entspricht, wobei das System (18) aufweist:

- Zuordnungsmittel (20), zu jedem Bereich ($M_1$, ..., $M_n$) des Hauptspeichers (12), das heißt, zu jedem Verbindungsport, der einen Zugriff auf den Cachespeicher erlaubt, mindestens eines Cachebereichs ($C_1$, ..., $C_p$), und
- temporäre Zuweisungsmittel (28) zu einer in einem der Bereiche ($M_1$, ..., $M_n$) des Hauptspeichers (12) beliebigen gespeicherten Datenzeile, einer Cachezeile des Cachespeichers (16),

**dadurch gekennzeichnet, dass** die Zuordnungsmittel (20) auf Zuordnungsparametern (P) beruhen, die eine Korrespondenz zwischen jedem Verbindungsport und dem oder den Cachebereich (en) anzeigen, der oder die ihnen zugeordnet ist/sind, und dadurch, dass das System (18) ferner Erzeugungs- und Aktualisierungsmittel (14) dieser Zuordnungsparameter (P) durch Aktivierung der Zuordnungsmittel (20) aufweist, um den oder die Cachebereich(e) zu definieren und zu ändern, der/die jedem Verbindungsport in Abhängigkeit von Bedarfen der konkurrierenden Anwendungen zugeordnet ist/sind, wobei die temporären Zuweisungsmittel (28) demzufolge konzipiert sind, um eine Cachezeile zu bestimmen, die auf der Basis dieser Zuordnungsparameter (P) einer Datenzeile zuzuweisen ist, und in einem der Cachebereiche ($C_1$, ..., $C_p$), der dem Hauptspeicherbereich zugeordnet ist, in dem die Datenzeile gespeichert ist.

2. Elektronischer Chip (10), aufweisend einen Cachespeicher (16) und ein Korrespondenzverwaltungssystem (18) nach Anspruch 1.

3. Elektronischer Chip (10) nach Anspruch 2, wobei die temporären Zuweisungsmittel (28) im Cachespeicher (16) implementiert sind und mindestens einen Zuordnungsdetektor (22) aufweisen, der eingehend die Zuordnungsparameter (P) empfängt und ausgehend einen Korrespondenzhinweis zwischen den Verbindungsports und den Cachebereichen ($C_1$, ..., $C_p$), das heißt, zwischen den Hauptspeicherbereichen ($M_1$, ..., $M_n$) und den Cachebereichen ($C_1$, ..., $C_p$), bereitstellt.

4. Elektronischer Chip (10) nach Anspruch 3, wobei die temporären Zuweisungsmittel (28) ferner mindestens ein Verteilermodul (26) aufweisen, das eingehend die Adresse (@) einer im Hauptspeicher (12) gespeicherten Datenzeile empfängt und ausgehend, auf der Basis von dem vom Zuordnungsdetektor (22) bereitgestellten Korrespondenzhinweis, die Auswahl einer Cachezeile bereitstellt.

5. Elektronischer Chip (10) nach Anspruch 4, wobei das Verteilermodul (26) für die Umsetzung einer deterministischen parametrierbaren Funktion zur Bereitstellung einer Cachezeile auf der Basis der Adresse (@) einer im Hauptspeicher (12) gespeicherten Datenzeile mikroprogrammiert ist.

6. Elektronischer Chip (10) nach Anspruch 5, wobei die vom Verteilermodul (26) umgesetzte Funktion eine Hashfunktion, insbesondere eine Modulofunktion, eine Hashfunktion basierend auf XOR oder eine Kombination dieser Funktionen ist.

7. Elektronischer Chip (10) nach einem der Ansprüche 4 bis 6, wobei die temporären Zuweisungsmittel (28) aufweisen:

- eine Vielzahl von parallel erreichbaren Zuordnungsdetektoren ($22_1$, ..., $22_N$),
- eine Vielzahl von Verteilermodulen ($26_1$, ..., $26_N$) für den gleichzeitigen Empfang einer Vielzahl von Adressen ($@_1$, ..., $@_m$) von im Hauptspeicher (12) gespeicherten Datenzeilen, und
- Routingschnittstellen (32, 36, 38) von eingehenden und/oder ausgehenden Daten dieser Vielzahlen von Zuordnungsdetektoren und Verteilermodulen.

8. Elektronischer Chip (10) nach einem der Ansprüche 1 bis 7, wobei der Cachespeicher (16) ein Speicher mit Vielzahlspeicherbanken ($Bk_1$, ..., $Bk_p$) ist, die gemäß einer zweidimensionalen oder dreidimensionalen Topologie organisiert sind, wobei jeder Cachebereich eine Speicherbank des Cachespeichers mit möglicher eigener Kontrolllogik ist.

9. Elektronischer Chip (10) nach Anspruch 8, wobei die Speicherbanken ($Bk_1$, ..., $Bk_p$) des Cachespeichers (16) miteinander durch eine Netzstruktur (70) auf zweidimensionalem oder dreidimensionalem Chip verbunden sind, wobei der elektronische Chip eine Vielzahl von Zugangsports zu dieser Netzstruktur auf Chip aufweist, wobei ein Zugangsport jeweils für jeden der Bereiche ($M_1$, ..., $M_n$) des Hauptspeichers (12) definiert ist.

10. Korrespondenzverwaltungsverfahren zwischen einem Cachespeicher (16), der in eine Vielzahl von Cachebereichen ($C_1$, ..., $C_p$) unterteilt ist, und einem Hauptspeicher (12), der in eine Vielzahl von Speicherbereichen ($M_1$, ..., $M_n$) unterteilt ist, die jeweils speziell der Ausführung einer Softwareanwendung einer Gruppe während der Ausführung konkurrierender Softwareanwendungen ($100_i$, ..., $100_n$) zugeordnet sind, wobei der Cachespeicher (16) mit mehreren Verbindungsports ausgestattet ist und jeder der Hauptspeicherbereiche einem einzigen Verbindungsport des Cachespeichers zugeordnet ist, wobei dieser Port für die Softwareanwendung bestimmt ist, die diesem Hauptspeicherbereich entspricht, wobei das Verfahren aufweist:

    - einen Zuordnungsschritt zu jedem Bereich ($M_1$, ..., $M_n$) des Hauptspeichers (12), das heißt, zu jedem Verbindungsport, der einen Zugriff auf den Cachespeicher erlaubt, mindestens eines Cachebereichs ($C_1$, ..., $C_p$), und
    - einen temporären Zuweisungsschritt (204) zu einer in einem der Bereiche ($M_1$, ..., $M_n$) des Hauptspeichers (12) beliebigen gespeicherten Datenzeile einer Cachezeile des Cachespeichers (16),

    **dadurch gekennzeichnet, dass** die Zuordnung auf Zuordnungsparametern (P) beruht, die eine Korrespondenz zwischen jedem Verbindungsport und dem oder den Cachebereichen anzeigen, der oder die ihnen zugeordnet ist/sind, und dadurch, dass das Verfahren ferner einen Erzeugungs- und Aktualisierungsschritt (102) dieser Zuordnungsparameter (P) aufweist, um den oder die Cachebereich(e) zu definieren und zu ändern, der/die jedem Verbindungsport in Abhängigkeit von Bedarfen der konkurrierenden Anwendungen zugeordnet ist/sind, wobei die temporäre Zuweisung einer Cachezeile zu einer Datenzeile demzufolge auf der Basis dieser Zuordnungsparameter und in einem der Cachebereiche ($C_1$, ..., $C_p$) erfolgt, der dem Hauptspeicherbereich zugeordnet ist, in dem die Datenzeile gespeichert ist.

11. Korrespondenzverwaltungsverfahren nach Anspruch 10, wobei jeder Bereich ($M_1$, ..., $M_n$) des Hauptspeichers (12) von Werten einer vorbestimmten Gruppe von Adressbits, beispielsweise von höchstwertigen Bits, der Adressbits identifiziert wird, mit deren Hilfe die Adressen der im Hauptspeicher gespeicherten Daten ausgedrückt werden.

12. Korrespondenzverwaltungsverfahren nach Anspruch 10 oder 11, wobei die Zuordnung zu zwei verschiedenen Bereichen des Hauptspeichers (12) mindestens eines gemeinsamen Bereichs des Cachespeichers (16) mit Hilfe von Zuordnungsparametern (P) genehmigt und parametrierbar ist.

13. Rechnerprogramm, das von einem Kommunikationsnetzwerk herunterladbar und/oder auf einem von dem Rechner lesbaren Datenträger gespeichert und/oder von einem Prozessor ausführbar ist, **dadurch gekennzeichnet, dass** es Befehle für die Ausführung der Schritte eines Korrespondenzverwaltungsverfahrens nach einem der Ansprüche 10 bis 12 umfasst, wenn das Programm auf einem Rechner ausgeführt wird.

**Claims**

1. A system (18) for managing correspondence between a cache memory (16), subdivided into a plurality of cache areas ($C_1$, ..., $C_p$) and a main memory (12), subdivided into a plurality of memory areas ($M_1$, ..., $M_n$) each specifically associated with a software application of a set of concurrent software applications, wherein the cache memory (16) is provided with several connection ports and each of said main memory areas is associated with a unique connection port of the cache memory, said port being dedicated to the software application which corresponds to said main memory area, the system (18) comprising:

    - means (20) for allocating, to each area ($M_1$, ...,

$M_n$) of the main memory (12), i.e. to each connection port that allows an access to the cache memory, at least one cache area ($C_1$, ..., $C_p$), and

- means (28) for temporarily assigning, to any data row stored in one of said areas ($M_1$, ..., $M_n$) of the main memory (12), a cache row of the cache memory (16),

**characterized in that** the allocating means (20) are based on allocation settings (P) indicating a correspondence between each connection port and the cache area(s) allocated thereto, and **in that** the system further comprises means (14) for generating and updating these allocation settings (P) by activating the allocation means (20) for defining and amending te cache area(s) allocated to each connection port according to requirements of the concurrent applications, the temporary assigning means (28) then being designed to determine a cache row to be assigned to a data row based on these allocation settings (P) and in one of the cache areas ($C_1$, ..., $C_p$) allocated to the main meory area wherein said data row is stored.

2. An electronic chip (10) comprising a cache memory (16) and a system (18) for managing correspondence according to claim 1.

3. The electronic chip (10) according to claim 2, wherein the temporary assigning means (28) are implemented in the cache memory (16) and comprise at least one allocation detector (22) receiving as an input the allocation settings (P) and supplying as an output an indication of the correspondences between the connection ports and the cache areas ($C_1$, ..., $C_p$), i.e. the between the main memory areas ($M_1$, ..., $M_n$) and the cache areas ($C_1$, ..., $C_p$).

4. The electronic chip (10) according to claim 3, wherein the temporary assigning means (28) further comprise at least one distribution module (26) receiving as an input the address (@) of a data row stored in the main memory (12) and supplying as an output the selection of a cache row based on the correspondence indication supplied by the allocation detector (22).

5. The electronic chip (10) according to claim 4, wherein the distribution module (26) is microprogrammed for the use of a deterministic configurable function for supplying a cache row from the address (@) of a data row stored in the main memory (12).

6. The electronic chip (10) according to claim 5, wherein the function used by the distribution module (26) is a hash function, particularly a modulo function, an XOR-based hash function or a combination of these functions.

7. The electronic chip (10) according to any of claims 4 to 6, wherein the temporary assigning means (28) comprise:

- a plurality of allocation detectors ($22_1$, ..., $22_N$) accessible in parallel,
- a plurality of distribution modules ($26_1$, ..., $26_N$) for simultaneously receiving a plurality of addresses ($@_1$, ..., $@_m$) of data rows stored in the main memory (12), and
- interfaces (32, 36, 38) for routing input and/or output data of these pluralities of allocation detectors and distribution modules.

8. The electronic chip (10) according to any of claims 1 to 7, wherein the cache memory (16) is a memory with multiple memory banks ($Bk_1$, ..., $Bk_p$) organized according to a two-dimensional or three-dimensional topology, each cache area being a memory bank of the cache memory that can have its own control logic.

9. The electronic chip (10) according to claim 8, wherein the memory banks ($Bk_1$, ..., $Bk_p$) of the cache memory (16) are interconnected together by a two-dimensional or three-dimensional network-on-chip structure (70), the electronic chip comprising a plurality of access ports to this network-on-chip structure, one access port being defined respectively for each of said areas ($M_1$, ..., $M_n$) of the main memory (12).

10. A method for managing correspondence between a cache memory (16), subdivided into a plurality of cache areas ($C_1$, ..., $C_p$) and a main memory (12), subdivided into a plurality of memory areas ($M_1$, ..., $M_n$) each specifically associated with the execution of a software application of a set of concurrent running software applications ($100_1$, ..., $100_n$), wherein the cache memory (16) is provided with several connection ports and each of said main memory areas is associated with a unique connection port of the cache memory, said port being dedicated to the software application which corresponds to said main memory area, the method comprising:

- a step for allocating, to each area ($M_1$, ..., $M_n$) of the main memory (12), i.e. to each connection port that allows an access to the cache memory, at least one cache area ($C_1$, ..., $C_p$), and
- a step for temporarily assigning (204), to any data row stored in one of said areas ($M_1$, ..., $M_n$) of the main memory (12), a cache row of the cache memory (16),

**characterized in that** the allocation is based on allocation settings (P) indicating a correspondence between each connection port and the cache area(s) allocated thereto, and **in that** the method further comprises a step for generating (102) and updating these allocation settings (P) for defining and amending te cache area(s) allocated to each connection port according to requirements of the concurrent applications, the temporary assigning of a cache row to a data row then being performed based on these allocation settings and in one of the cache areas $(C_1, ..., C_p)$ allocated to the main memory area wherein said data row is stored.

11. The method for managing correspondence according to claim 10, wherein each area $(M_1, ..., M_n)$ of the main memory (12) is identified by values of a predetermined set of address bits, for example the most significant bits, from the address bits using which the addresses of the data stored in the main memory are expressed.

12. The method for managing correspondence according to claim 10 or 11, wherein the allocation to two different areas of the main memory (12) of at least one common area of the cache memory (16) is authorized and configurable using the allocation settings (P).

13. A computer program downloadable from a communication network and/or saved on a computer-readable medium and/or executable by a processor, **characterized in that** it comprises instructions for executing the steps of a method for managing correspondence according to any of claims 10 to 12, when said program is executed on a computer.

## Figure 1

## Figure 2

*Figure 3*

*Figure 4*

*Figure 5*

*Figure 6*

## Figure 7

## Figure 8

## Figure 9

## Figure 10

## Figure 11

## Figure 12

## Figure 13

| | | | | | |
|---|---|---|---|---|---|
| $Bk_{1,1}$ | $Bk_{1,2}$ | $Bk_{1,3}$ | $Bk_{1,4}$ | $Bk_{1,5}$ | $Bk_{1,6}$ |
| $Bk_{2,1}$ | $Bk_{2,2}$ | $Bk_{2,3}$ | $Bk_{2,4}$ | $Bk_{2,5}$ | $Bk_{2,6}$ |
| $Bk_{3,1}$ | $Bk_{3,2}$ | $Bk_{3,3}$ | $Bk_{3,4}$ | $Bk_{3,5}$ | $Bk_{3,6}$ |
| $M_1$ | $M_2$ | $M_3$ | $M_4$ | $M_5$ | $M_6$ |

## Figure 14

| | | | | | |
|---|---|---|---|---|---|
| $Bk_{1,1}$ | $Bk_{1,2}$ | $Bk_{1,3}$ | $Bk_{1,4}$ | $Bk_{1,5}$ | $Bk_{1,6}$ |
| $Bk_{2,1}$ | $Bk_{2,2}$ | $Bk_{2,3}$ | $Bk_{2,4}$ | $Bk_{2,5}$ | $Bk_{2,6}$ |
| $Bk_{3,1}$ | $Bk_{3,2}$ | $Bk_{3,3}$ | $Bk_{3,4}$ | $Bk_{3,5}$ | $Bk_{3,6}$ |
| $M_1$ | $M_2$ | $M_3$ | $M_4$ | $M_5$ | $M_6$ |

## Figure 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6351788 B1
- US 5572700 A
- US 20100275049 A1
- WO 2006078837 A2

### Littérature non-brevet citée dans la description

- **C. KIM ; D. BURGER ; S.W. KECKLER.** Nonuniform cache architecture for wire-delay dominated on-chip caches. *IEEE Micro,* Novembre 2003, vol. 23 (6), 99-107
- **J. HUH ; C. KIM ; H. SHAFI ; L. ZHANG ; D. BURGER ; S.W. KECKLE.** A NUCA substrate for flexible CMP cache sharing. *Proceedings of the 19th International Conference on Supercomputing,* Juin 2005, 31-40
- **E. BOLOTIN ; Z. GUZ ; I. CIDON ; R. GINOSAR ; A. KOLODNY.** The power of priority: NoC based distributed cache coherency. *Proceedings of First International Symposium on Networks-on-Chips,* Mai 2007, 117-126
- **H. DYBDAHL ; P. STENSTROM.** An adaptive shared/private NUCA cache partitioning scheme for chip multiprocessors. *Proceedings of the IEEE 13th International Symposium on High Performance Computer Architecture,* Février 2007, 2-12
- **H. SAITO ; M. NAKAJIMA ; T. OKAMOTO ; Y. YAMADA ; A. OHUCHI ; N. IGUCHI T. SAKAMOTO ; K. YAMAGUCHI ; M. MIZUNO.** A chip-stacked memory for on-chip SRAM-rich SoCs and processors. *IEEE Journal of Solid-State Circuits,* Janvier 2010, vol. 45 (1), 15-22
- **B. ZHAO ; Y. DU ; Y. ZHANG ; J. YANG.** Variation-tolerant non-uniform 3D cache management in die stacked multicore processor. *Proceedings of the 42nd annual IEEE/ACM International Symposium on Microarchitecture,* Décembre 2009, 222-231
- **N. MADAN ; L. ZHAO ; N. MURALIMANOHAR ; A. UDIPI ; R. BALASUBRAMONIAN ; R. LYER ; S. MAKINENI ; D. NEWELL.** Optimizing communication and capacity in a 3D stacked reconfigurable cache hierarchy. *Proceedings of IEEE 15th International Symposium on High Performance Computer Architecture,* Février 2009, 262-274
- **L. FEIHUI ; C. NICOPOULOS ; T. RICHARDSON ; Y. XIE ; V. NARAYANAN ; M. KANDEMIR.** Design and management of 3D chip multiprocessors using network-in-memory. *Proceedings of 33rd annual International Symposium on Computer Architecture,* Mai 2006, 130-141